# FASCICULE DE BREVET EUROPEEN

(11) **EP 1 402 196 B1**
(45) Date de publication et mention de la délivrance du brevet: **15.12.2004**
(21) Numéro de dépôt: 02758507.4
(22) Date de dépôt: 11.06.2002
(51) Int. Cl.: F16F 9/096, F16F 9/44

(54) **AMORTISSEUR HYDRAULIQUE POLYVALENT POUR VEHICULE.**
HYDRAULISCHER MEHRZWECKSTOSSDÄMPFER FÜR FAHRZEUG
MULTIPURPOSE HYDRAULIC SHOCK ABSORBER FOR VEHICLE

(30) Priorité: 12.06.2001 FR 0107993
(43) Date de publication de la demande: 31.03.2004
(73) Titulaire: Realisation et Developpement Concept, 87270 Bonnac La Cote (FR)
(72) Inventeur: COQUET, Vincent, F-87270 Bonnac La Cote (FR)
(74) Mandataire: Delorme, Nicolas
(86) Numéro de dépôt international: PCT/FR2002/001994
(87) Numéro de publication internationale: WO 2002/101261

(56) Documents cités:
- WO-A-94/12360
- FR-A- 2 764 353
- US-A- 4 936 424
- US-A- 4 958 706

## Description

L'invention est relative à un amortisseur hydraulique pour véhicule, et en particulier, à un amortisseur relié à un réservoir oléopneumatique indépendant de lui.

On connaît, par les documents US 4 958 706 et FR-A-2 764 353, un amortisseur hydraulique composé d'un corps tubulaire dans lequel peut se mouvoir un piston, calé à l'extrémité d'une tige, et divisant le corps en deux chambres, une chambre de grande section transversale communiquant avec le réservoir, et une chambre de plus petite section transversale, car traversée par la tige du piston. L'amortisseur est associé à des moyens à ressorts tendant à le ramener en position d'extension et, en général, constitués par un ressort hélicoïdal de compression disposé autour du corps d'amortisseur et prenant appui, d'un côté sur une coupelle liée au corps, et, de l'autre côté, sur une coupelle liée à l'extrémité extérieure de la tige, extrémité équipée, comme le corps d'amortisseur, de moyens de fixation sur le véhicule.

La tige du piston est tubulaire et est traversée par des trous radiaux faisant communiquer un canal annulaire intérieur et longitudinal, avec la chambre de petite section. Le canal annulaire intérieur est délimité entre un élargissement de l'alésage axial de la tige tubulaire du piston et une tige axiale de réglage du tarage d'un clapet anti retour coopérant avec le débouché de cette tige tubulaire dans la chambre de grande section. Ce clapet axial est fermé lorsque l'amortisseur est en phase de compression. En phase d'extension, il est soulevé d'une valeur dépendant de la pression exercée sur lui par le fluide et, en conséquence, de son tarage assuré par des moyens à ressorts.

Le piston est traversé, de part en part, par des canaux longitudinaux dont les débouchés dans la chambre de petite section sont obturés par un clapet anti retour ouvert lorsque l'amortisseur est en phase de compression et fermé lorsqu'il est en phase d'extension.

Le réservoir oléopneumatique est séparé par une membrane, ou un piston diviseur mobile, en une chambre contenant du gaz et une chambre contenant de l'huile. Cette chambre hydraulique communique avec la conduite provenant de la chambre de grande section de l'amortisseur par au moins deux canaux équipés l'un, de moyens contrôlant l'entrée du fluide dans la chambre hydraulique, l'autre de moyens contrôlant la sortie du fluide vers l'amortisseur.

De façon connue, quand l'amortisseur est en phase de compression, l'huile excédentaire contenue dans la chambre de grande section forme un flux passant, en partie à travers les canaux du piston en soulevant le clapet anti retour correspondant et, pour une autre partie, dans la chambre hydraulique du réservoir. Le passage des flux d'huile par les clapets anti retour génèrent des pertes de charge et amortissent le mouvement relatif piston-corps amortisseur, et cela, selon les réglages des clapets, avant ou après l'amortissement assuré par le ressort d'amortisseur.

Dans la phase d'extension, dite aussi de détente car résultant de la détente du ressort, l'huile excédentaire contenue dans la chambre de petite section de l'amortisseur génère un flux qui passe par le canal annulaire de la tige du piston, soulève le clapet anti retour axial et va dans la chambre de grande section. Simultanément, le déplacement du piston crée une aspiration qui génère un flux compensateur provenant du réservoir et parvenant dans cette même chambre.

Les caractéristiques de fonctionnement d'un amortisseur dépendent en partie de celles de ses moyens de rappel, généralement le ressort, et doivent être adaptées aux conditions d'utilisation du véhicule, à savoir : utilitaire, routier, sportif, compétition..... .

Le ressort se caractérise par sa course utile, définie en rapport avec la course de débattement des éléments de suspension et la garde au sol de la caisse, et par sa raideur, adaptée aux conditions d'utilisation. Il en résulte que toute modification de ces conditions nécessite soit de changer le ressort, soit de modifier les paramètres de fonctionnement de l'amortisseur en procédant à des réglages qui, pour la plupart des amortisseurs actuels, s'effectuent après démontage.

Parmi les mouvements de l'amortisseur, il est d'usage de considérer la compression basse vitesse, correspondant au travail de l'amortisseur lors du passage de la roue sur une succession de petites bosses, ou sur une chaussée dégradée impliquant petite course à grande fréquence, et la compression haute vitesse correspondant au travail de l'amortisseur lors du passage d'une roue sur une bosse haute impliquant grande course à fréquence plus basse. Parfois est ajouté un réglage moyenne vitesse.

Le réglage de la basse vitesse est très important dans le comportement de la suspension puisqu'il détermine le moment où l'amortisseur entre en action par rapport à son ressort. En effet, en fonction de l'utilisation du véhicule, sont affectés la tenue de route, le confort, les mouvements de caisse et la transmission de la puissance motrice au sol.

Pour un véhicule léger à usage routier, le confort est privilégié par rapport au contrôle des mouvements de caisse et à la transmission de la puissance au sol, pour lesquels le conducteur trouve toujours un compromis. Dans ce cas, le réglage détermine le moment à partir duquel l'amortisseur entre en action par rapport à son ressort, lequel, par sa raideur, supporte la masse suspendue, augmentant avec la vitesse du véhicule. L'amplitude de déplacements est faible.

Dans une utilisation sportive, les mouvements de caisse liés à la variation de masse due à la vitesse du véhicule doivent être contrôlés par le réglage basse vitesse afin que l'amortisseur travaille légèrement avant le ressort en augmentant artificiellement sa raideur. Cela a pour effet de stabiliser les mouvements de caisse et de rendre plus précise la conduite du véhicule.

En usage tout terrain, le réglage des basses vitesses est aussi très important pour l'adaptation à la nature du sol. Toutefois, la transmission de la puissance au sol est privilégiée au détriment de la tenue de route et du confort, qui deviennent des compromis.

Les réglages moyenne vitesse sont destinés à apporter l'amortissement hydraulique dès que les conditions de déplacement de l'ensemble s'approchent des conditions de mise en résonance du ressort.

Le réglage des hautes vitesses intervient lors d'un déplacement rapide de la masse suspendue pour réduire le freinage du flux hydraulique, afin que le ressort prenne la majeure partie de l'énergie, l'amortisseur n'intervenant que pour modifier sa raideur.

Dans les amortisseurs connus, aucun d'eux ne comporte l'ensemble de ces moyens de réglage et encore moins des moyens réglables sans démontage. Ceux comportant des réglages basse vitesse mettent en oeuvre des lamelles métalliques élastiquement déformables qui, dénommées clinquants, sont empilées les unes sur les autres, parfois avec des réductions de diamètre, et constituent les moyens de fermeture élastique du clapet anti-retour obturant les trous longitudinaux du piston et s'ouvrant à la détente. Ces clinquants sont combinés avec un circuit de fuite traversant le piston et définissant ce qui est appelé une pré charge. Les inconvénients de ces moyens sont bien connus et comprennent la nécessité de démontage pour réglage, la formation d'écoulements turbulents favorisant l'échauffement du fluide, sa baisse de viscosité et la modification de l'amortissement, mais aussi une variation des caractéristiques avec la croissance de la vitesse de passage du fluide et une possibilité de détérioration par retournement des lamelles dépassant leur limite élastique et formant un parapluie retourné.

Les deux documents cités au début mettent en oeuvre des moyens similaires mais ajoutent, dans la tête du réservoir et sur le circuit hydraulique provenant de la chambre de grande section, un ajutage dont la section de passage est réglable depuis l'extérieur. Il en résulte que la pré charge est réalisée sur le piston et qu'elle présente tous les inconvénients exposés ci-dessus, et en particulier qu'elle ne peut être réglée que par démontage, ce qui limite la plage des réglages permise par l'ajutage dans la tête du réservoir.

Le document FR-A-2 764 353 associe au réglage basse vitesse des moyens de réglage des hautes vitesses et des vitesses intermédiaires. Le chapeau du réservoir comporte deux canaux verticaux communiquant avec le réservoir et alimentés par un conduit provenant de l'amortisseur. Dans l'un de ces canaux est disposée une vis de réglage des hautes ou moyennes vitesses portant, à son extrémité et dans le réservoir hydraulique, un clapet anti retour avec ses moyens de rappel le plaquant sur un siège, avec un effort dépendant du vissage de la vis dans le chapeau. Dans l'autre canal, est disposée une vis pointeau dont l'extrémité conique coopère avec un siège pour délimiter un ajutage, laissant passer un débit de fuite, réglable, en direction de la chambre hydraulique du réservoir. Les moyens de réglage avec la vis pointeau permettent de régler la compression basse vitesse, tandis que les autres moyens avec clapet anti-retour et ressort permettent de régler la compression à haute vitesse. Pour les basses vitesses, la pré charge est définie sur le piston et la vis de réglage du débit de fuite, disposée après cette pré charge et sur le réservoir, est alimentée par le même canal que celui alimentant les clapets de réglages des moyennes et hautes vitesses. De la sorte, tout ajustement de la vis de fuite modifie la pression et le débit du fluide dans le canal commun et interagit sur les conditions d'ouverture des clapets haute et moyenne vitesse, dont les réglages doivent être réajustés. Il en résulte qu'à défaut de connaître parfaitement l'amortisseur, celui-ci présente un fonctionnement instable.

L'invention a pour objet de fournir un amortisseur polyvalent pour véhicule ayant, tant pour sa phase de compression que pour sa phase de détente, une large plage de réglage, et dans lequel, chacun de ses multiples réglages, est sans conséquence sur les autres réglages et est stable en fonctionnement.

A cet effet, dans l'amortisseur polyvalent selon l'invention, la totalité des moyens réglables déterminant les conditions d'amortissement en phase de compression sont disposés dans la tête du réservoir et sont accessibles de l'extérieur sans démontage, et au moins ceux réglant la compression à basse vitesse, comprennent un corps tubulaire de réglage de la précharge se vissant dans la tête du réservoir, dépassant à l'extérieur de celle-ci par une tête de manoeuvre et, à l'intérieur du réservoir, par une extrémité active conformée en siège, ce corps tubulaire :
a) communiquant avec la chambre de grande section de l'amortisseur,
b) étant traversé axialement par une vis de réglage, ladite vis se vissant dans sa partie supérieure et portant, à son extrémité intérieure au réservoir, un clapet avec ses moyens de tarage à ressort,
c) et comportant, sur sa partie conformée en siège pour le clapet, au moins une rainure radiale formant un canal de fuite déterminant la précharge, la section de passage du canal étant déterminée, entre une valeur zéro et une valeur maximale, par la distance entre, d'une part, la face en bout du corps tubulaire et, d'autre part, la face interne de la tête du réservoir.

Ainsi, la valeur de la précharge dépend de la section de passage d'une rainure radiale ménagée dans l'extrémité du corps tubulaire formant siège pour le clapet et peut être réglée, sans que cela influence le fonctionnement du clapet, dont le réglage est indépendant.

De préférence, le clapet lamellaire, coopérant avec les canaux longitudinaux ménagés dans le piston, est constitué par une unique rondelle ressort dont le bord interne est pincé dans un embrèvement du piston par la face en bout d'une bague épaulée, elle-même vissée sur un prolongement du piston.

Par cet aménagement qui n'est possible qu'en raison de la disposition de la totalité des réglages sur le réservoir, le clapet lamellaire est constitué par une lame ressort dont la raideur est définie et qui est apte à résister, sans déformation, aux effets des surpressions consécutives à un fonctionnement à très haute vitesse.

Dans une forme d'exécution, les moyens de réglage de la compression à haute vitesse, disposés dans la tête du réservoir, sont associés à des moyens de réglage à très haute vitesse et sont constitués par un corps tubulaire traversant la tête et dont l'extrémité extérieure à cette tête est vissée dans celle-ci, alors que son extrémité intérieure, dépassant d'un canal ménagé dans la tête, porte un clapet coopérant avec un siège formé sous la tête, les conditions d'ouverture de ce clapet dépendant, à haute vitesse, du tarage de rondelles ressorts disposées autour de l'extrémité intérieure du corps tubulaire et entre le clapet et un écrou vissé sur cette extrémité, et aux très hautes vitesses, du tarage de rondelles ressorts disposées autour de l'extrémité intérieure au réservoir d'une tige de réglage traversant le corps tubulaire et se vissant dans celui-ci, ces rondelles étant interposées entre, d'une part, un écrou vissé sur cette tige et, d'autre part, la paroi diamétrale d'une cloche, ladite cloche étant en appui sur l'extrémité du corps tubulaire et présentant une jupe entourant les moyens de tarage à haute vitesse et s'étendant en direction du clapet en ménageant, entre son bord et ce clapet, un jeu correspondant à la course d'ouverture du clapet en fonctionnement à haute vitesse.

Cette construction permet donc de disposer sur le chapeau du réservoir de deux moyens de réglage de la compression pour les hautes et très hautes vitesses qui, fonctionnant en cascade, s'ajoutent aux moyens de réglage, respectivement pour les basses vitesses avec réglage de la précharge par la fuite, et pour les moyennes vitesses par le clapet, chacun de ces réglages étant indépendant et sans conséquence sur les autres, lors de l'opération de réglage et lors du fonctionnement de l'amortisseur.

Ces réglages étant tous effectués de l'extérieur et sans aucun démontage, il est ainsi possible de modifier très rapidement les conditions de fonctionnement des amortisseurs d'un véhicule, par exemple pour passer d'un usage sur route à un usage sur piste ou avec une conduite sportive, mais aussi d'adapter les réglages à chaud, c'est-à-dire après fonctionnement des amortisseurs, pour prendre en compte les variations de viscosité du fluide hydraulique.

Avantageusement, le piston est monolithique avec une queue et une cheminée tubulaire saillant dans la chambre de grande section et dont l'alésage interne assure le guidage en translation de la tête du clapet axial anti retour s'ouvrant à la détente, la paroi de cette cheminée étant traversée, près du piston et du siège pour le clapet axial, par plusieurs canaux radiaux de passage pour le fluide, tandis que le siège du clapet est formé par une portée tronconique, ménagée dans le piston et apte à recevoir la tête tronconique du clapet, cette portée étant prolongée dans le piston par un alésage cylindrique coopérant avec la queue cylindrique du clapet pour former un canal annulaire de stabilisation du débit d'huile transitant lors de la détente, ledit canal étant alimenté par des trous radiaux ménagés dans la partie tubulaire correspondante de la queue du piston.

Le piston, qui est monolithique, avec sa cheminée et une queue tronconique, est dégagé de toute sujétion nécessaire à sa liaison avec la tige, est plus résistant et peut comporter une queue de plus grand diamètre procurant un canal annulaire interne de plus grande section, et un siège de plus grand diamètre pour le clapet, ce qui, avec le guidage du clapet par la cheminée et le contrôle du flux par la queue de ce clapet, est favorable à la conservation d'un régime laminaire, seule condition pour obtenir un débit stable et sans battement du clapet. Cela n'est pas le cas dans les amortisseurs actuels où le clapet axial fonctionne souvent en régime turbulent, et est soumis à des battements perturbant la détente de l'amortisseur.

Le monolithisme du piston permet aussi d'augmenter la section des canaux coopérant avec le clapet lamellaire et de mieux les répartir, en améliorant ainsi la circulation du fluide dans la phase de compression.

Dans une forme d'exécution, la cheminée du piston coopère avec un alésage borgne, ménagé dans la tête de piston et communiquant avec le réservoir par un canal de liaison, pour former une butée hydraulique d'arrêt progressif du piston en fin de cours de compression.

Cette butée peut prendre diverses formes qui vont être décrites dans la description qui suit, en même temps que l'amortisseur selon l'inyention sera décrit en référence au dessin annexé.
Figure 1 est une vue en coupe longitudinale de l'amortisseur avec son réservoir, lorsque le piston est en phase de détente,
Figure 2 est une vue partielle de la tête d'amortisseur de figure 1, lorsque le piston est en fin de course de compression,
Figure 3 est une vue en coupe longitudinale d'un amortisseur similaire à celui de la figure 1, mais équipé d'une autre forme d'exécution de la butée hydraulique de fin de course de compression,
Figure 4 est une vue partielle d'une tête d'amortisseur équipée d'une autre forme d'exécution de la butée hydraulique de fin de course de compression,
Figure 5 est une vue partielle montrant, à échelle agrandie, une variante de réalisation de la butée hydraulique de figure 4, lorsque cette butée est en fin de course de compression,
Figure 6 est une vue en coupe longitudinale du piston et de certains des éléments qui lui sont associés,
Figure 7 est une vue partielle montrant, à échelle très agrandie, la fixation de la couronne métallique formant clapet anti retour à la détente,
Figure 8 est une vue en perspective du piston,
Figure 9 est une vue partielle en coupe longitudinale diamétrale de la tête du réservoir,
Figure 10 est une vue en coupe suivant X-X de figure 9,
Figure 11 est une vue partielle montrant, à échelle très agrandie, les moyens générant la fuite de précharge dans la tête du réservoir,
Figure 12 est une vue en coupe suivant XII-XII de figure 9 montrant, à échelle agrandie, une forme d'exécution de cette tête de réservoir comportant, en plus des moyens de réglage de la compression en basse vitesse et moyenne vitesse, des moyens de réglage en haute vitesse et très haute vitesse,
Figures 13, 14 et 15 sont des graphiques indiquant en ordonnées l'effort d'amortissement et en abscisses la course de compression et représentant les courbes d'amortissement obtenues par les réglages, respectivement, basses, moyennes, hautes et très hautes vitesses.

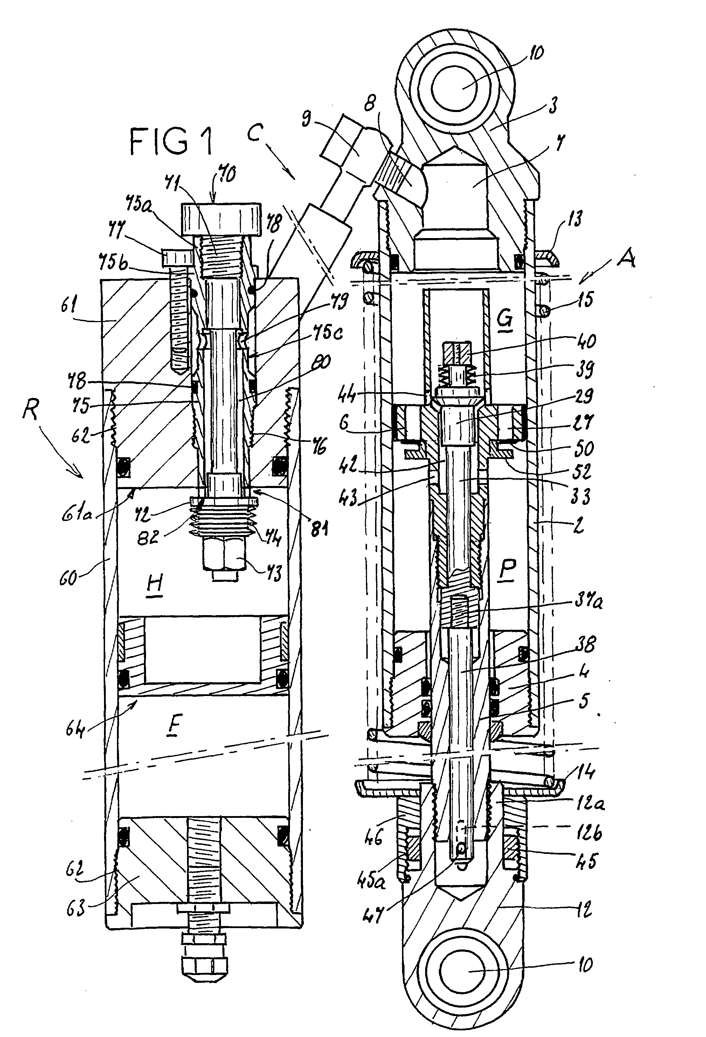

Comme montré à la figure 1, cet amortisseur hydraulique polyvalent est composé de deux éléments, à savoir un amortisseur A et un réservoir oléopneumatique R, ces deux éléments étant reliés par un conduit hydraulique C.

L'amortisseur A est composé d'un corps tubulaire 2 dont l'une des extrémités est obturée de manière étanche par une tête d'amortisseur 3 et dont l'autre extrémité est obturée par un guide tige 4 traversé, axialement et avec étanchéité, par une tige tubulaire 5 liée à un piston 6. Ce piston divise la chambre intérieure de l'amortisseur en une chambre de grande section G et une chambre de petite section P.

Dans la chambre G, débouche un alésage borgne 7 ménagé dans la tête 3 et communiquant par un canal 8 avec un raccord hydraulique 9 vissé dans l'extrémité de ce canal et assurant la liaison hydraulique avec le conduit C. La tête 3 est également munie d'un oeil 10 permettant de fixer l'amortisseur sur le véhicule au même titre d'ailleurs que la tête 12, vissée à l'extrémité de la tige 5. La tête 3 du corps et la tête 12 de la tige sont solidaires, chacune, de coupelles respectivement 13 et 14, sur lesquelles prennent appui les extrémités opposées d'un ressort hélicoïdal de compression 15 tendant constamment à ramener l'amortisseur en position d'extension.

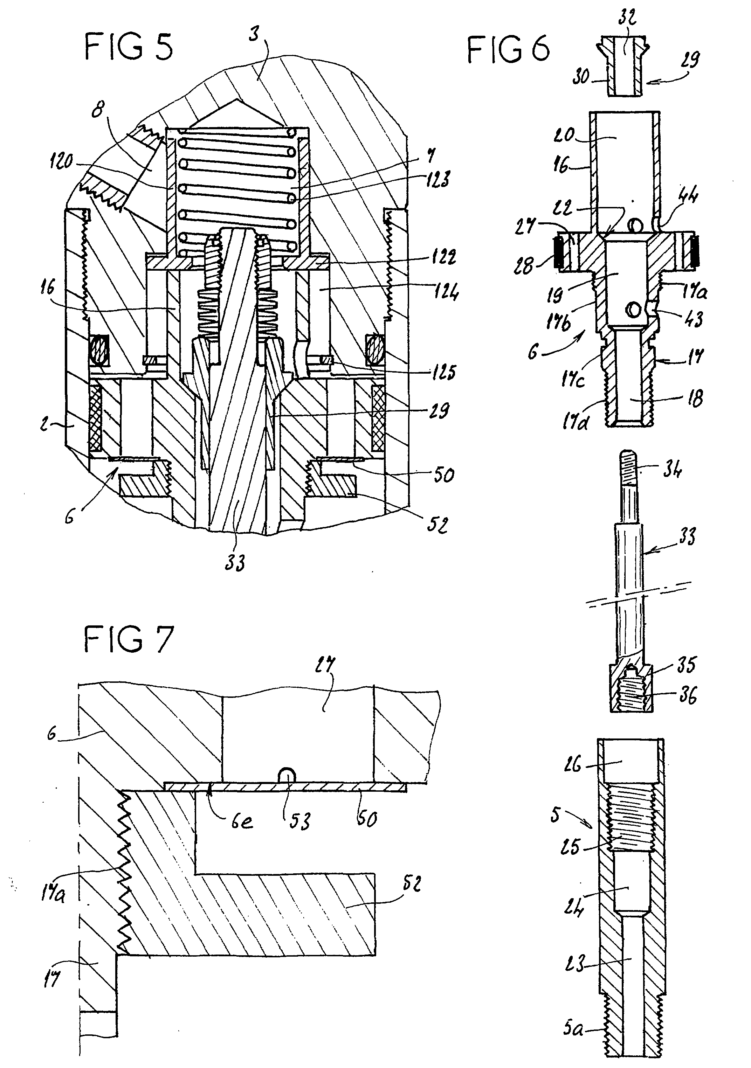

Comme montré plus en détails à la figure 6, le piston 6 est monolithique avec, d'une part, une cheminée 16 et, d'autre part, une queue tubulaire 17. En partant du piston vers l'extrémité de la queue 17, cette dernière comporte, extérieurement et successivement, une partie filetée 17a, une partie cylindrique de plus petit diamètre 17b, une partie ayant encore un plus petit diamètre 17c et, enfin, une partie filetée de plus petit diamètre 17d. Intérieurement, la queue 17 est traversée, en allant de son extrémité inférieure vers le piston 6, par un alésage axial 18, par un alésage axial 19 de plus grand diamètre, et dont la transition avec un alésage 20 ménagé dans la cheminée 16 est assurée par un siège tronconique 22.

La tige 5, qui extérieurement est cylindrique sur toute sa longueur, à l'exception de son extrémité inférieure équipée d'un filetage 5a permettant sa liaison par vissage avec la tête 12, comporte intérieurement une succession d'alésages axiaux de diamètres croissants, à savoir un alésage 23, un alésage 24, un alésage fileté 25 apte à coopérer avec l'extrémité filetée 17d du piston et un alésage lisse 26, apte à coopérer avec la partie cylindrique lisse 17c du piston pour améliorer le positionnement de celui-ci.

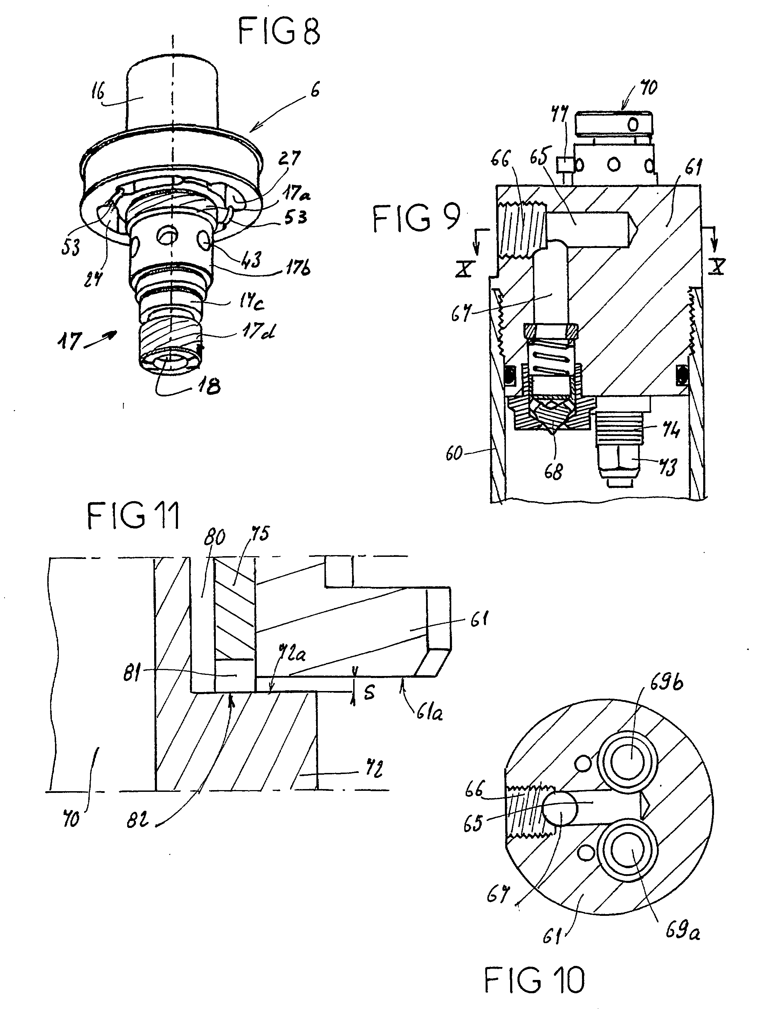

Le piston 6 est traversé verticalement et de part en part par des canaux longitudinaux 27 qui peuvent être circulaires ou présenter toute autre section, comme montré à la figure 8. Sur sa périphérie, le piston 6 est équipé d'une gorge pour une garniture 28.

L'alésage 20 de la cheminée 16 a un diamètre interne qui correspond sensiblement, au jeu fonctionnel près, à celui extérieur d'un clapet 29, tronconique et prolongé vers une queue 30 dont la longueur est supérieure à la valeur de son diamètre. Ce clapet comporte un alésage axial 32 pour le passage d'une tige axiale 33. L'extrémité supérieure de la tige axiale 33 est munie d'un filetage 34 et son l'extrémité inférieure est munie d'une tête épaulée 35 comportant un taraudage axial 36 permettant sa liaison avec l'extrémité filetée 37a d'une tige de commande 38, visible figure 1.

Lorsque ces différents éléments sont assemblés, et comme montré à la figure 1, sur le clapet 29 prennent appui des rondelles ressorts 39, de type Belleville, également en appui sur un écrou 40 vissé sur l'extrémité filetée 34 de la tige 33. Cette tige coopère avec l'alésage 32 du clapet et délimite, avec l'alésage 19 de la queue 17 du piston, un canal annulaire 42. Ce canal communique avec la chambre de petite section P par des perçages radiaux 43 ménagés dans la queue du piston. Par sa partie supérieure, il forme, autour de la queue 30 du clapet, un canal annulaire de plus faible section transversale qui contribue à stabiliser le flux d'huile allant de la chambre de petite section P à la chambre de grande section G . Ce flux passe par les trous radiaux 43, le canal 42, entre le clapet 29 et son siège 22, puis vient dans la chambre G en passant à travers la cheminée 16 par des trous radiaux 44, cylindriques et tangentant pratiquement la face du piston 6 tournée du côté de la chambre de grande section G.

Le réglage du tarage du clapet 29, donc de la compression des rondelles ressorts 33 par l'écrou 40, s'effectue par la tige de commande 38 qui, montée coulissante dans l'alésage 23 de la tige d'amortisseur 5, dépasse de l'extrémité de celle-ci pour coopérer avec des moyens de commande.

Dans la forme d'exécution représentée figure 1, ces moyens de commande comprennent une douille 45, une molette filetée 46 et une goupille traversante 47. La douille 45 comporte un alésage lisse par lequel elle est montée coulissante sur l'embout cylindrique 12a de la tête 12. Extérieurement, elle comporte un filetage 45a qui coopère avec le filetage interne de la molette 46, monté en rotation sur l'embout 12a mais calée en translation par rapport à cet embout par un jonc d'arrêt non représenté. La goupille 47, qui est disposée diamétralement dans l'extrémité de la tige de commande 38, traverse l'embout 12a par des lumières 12b, visibles figure 1, et est lié par ses deux extrémités à la douille 45 qui est ainsi calée en rotation avec possibilité de translation verticale.

Ainsi, lorsque la molette 46 est pivotée dans un sens ou dans l'autre, elle provoque le déplacement vertical de la tige 38 et, en conséquence, celui de la tige 33 à l'extrémité supérieure de laquelle sont fixés les moyens d'appui 40 des rondelles ressorts 39 prenant appui sur le clapet 29 qui, pour la suite de la description, sera appelé clapet axial.

Les canaux longitudinaux 27 ménagés dans le piston 6 pour coopérer avec le clapet anti retour lamellaire s'ouvrant lorsque l'amortisseur est en phase de compression, sont obturés par une unique rondelle ressort métallique 50 remplaçant l'empilage de rondelles en clinquant de l'état de la technique. Cette rondelle, visible à échelle agrandie figure 7, est réalisée dans un acier à ressort, s'étend radialement de part et d'autre des canaux 27 et est pincée, par son bord intérieur et dans un embrèvement 6e du piston 6, par la face en bout d'une bague de plaquage 52, vissée sur la partie filetée 17a de la queue 17 du piston.

Avec ce mode de construction, le clapet lamellaire anti retour ainsi constitué ne dispose d'aucune possibilité de réglage en fonctionnement, ce qui le différencie des amortisseurs de l'état de la technique et ce qui est sans intérêt ici, puisque tous les réglages de compression s'effectuent sur la tête du réservoir, comme cela sera précisé plus loin.

Aux faibles vitesses de compression, pour éviter que la rondelle 50 ait tendance à rester collée contre la face 6a du piston, et comme montré figures 7 et 8, de cette face débouche au moins une gorge circulaire 53 faisant communiquer les canaux 27 entre eux et réduisant l'effort de collage.

Le monolithisme du piston 6 permet de donner à sa queue 17 un plus grand diamètre et, à résistance égale par rapport à une tige tubulaire de plus petit diamètre extérieur, de ménager à l'intérieur de ce piston, un canal annulaire 42 de plus grande section, facilitant les transferts de fluide et conservant à ces transferts un régime laminaire, ce qui a pour avantage de ne pas affecter les réglages du clapet axial et d'éviter son battement, donc d'améliorer le fonctionnement général du piston en phase d'échappement. Parallèlement, la position et la répartition des canaux 27 servant au passage de l'huile en phase de compression ne sont plus définies en fonction de la dimension des organes de liaison du piston avec sa tige, et peuvent donc être disposées et organisées uniquement en fonction de critères hydrauliques. De plus, ils sont dimensionnés de manière que la somme de leur section transversale soit supérieure d'au moins 50 % à la section transversale du conduit 8 d'évacuation du fluide hydraulique vers le réservoir R. Cet aménagement élimine les phénomènes de cavitation, est favorable au maintien d'un régime lamellaire, réduit l'échauffement et les bruits et contribue à la constance des transits de fluide, donc des performances de l'amortisseur.

Avant de décrire le fonctionnement de l'amortisseur, il va être procédé à la description de son réservoir R et des moyens de réglage disposés sur ce réservoir.

Comme les réservoirs actuels, celui de la forme d'exécution représentée à la figure 1, est composé d'un corps tubulaire 60 muni de filetages intérieurs 62 à chacune de ses extrémités, filetages dans lesquels sont vissés, respectivement, une tête 61, et un bouchon 63. Le corps 60 contient un piston diviseur 64 le divisant en une chambre F, contenant un gaz sous pression, et une chambre H contenant un fluide hydraulique.

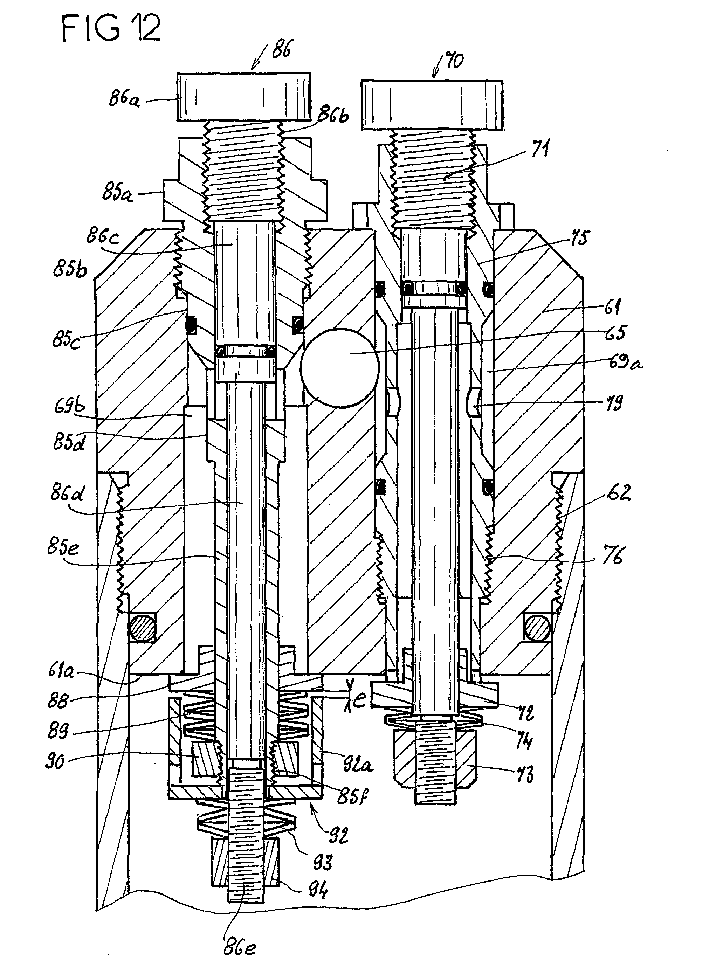

Les figures 9 et 10 montrent que la tête 61 comprend un cpnduit radial 65 débouchant à l'extérieur par un alésage fileté de plus grand diamètre 66, apte à coopérer avec l'embout fileté d'un raccord 9 équipant l'autre extrémité du conduit de liaison C avec l'amortisseur. Le canal 65 communique avec un canal longitudinal 67, à l'extrémité duquel est monté un clapet anti retour 68 s'ouvrant lorsque l'amortisseur est en phase d'extension pour favoriser le retour du fluide hydraulique dans la chambre G. Il communique aussi, soit avec un seul alésage vertical 69a, lorsque la tête 61 ne comporte que des moyens de réglage petite et haute vitesse, comme montré dans la forme d'exécution de figure 1, soit avec deux canaux 69a, 69b, lorsque la tête comporte des moyens de réglage basse vitesse, moyenne vitesse, haute vitesse et très haute vitesse, comme montré dans la forme d'exécution de figure 12.

La figure 1, qui représente donc à un réservoir équipé de moyens de réglage des basses et hautes vitesses comprend, de façon connue, une tige de réglage 70 avec une extrémité supérieure munie d'un filetage 71 et une extrémité inférieure disposée dans la chambre hydraulique H. Cette dernière sert de guidage à un clapet 72 et est munie d'un filetage pour un écrou 73 déterminant le tarage de rondelles ressorts 74, en appui sur le clapet. Toutefois, à la différence des moyens de réglage existants, le clapet 72 qui est ici un clapet plat, ne prend pas appui contre la face interne 61 a de la tête 61 mais contre la face en bout 82 d'un corps tubulaire 75, lui-même vissé par un filetage 76 dans une partie filetée de l'alésage 69a de la tête. Ce corps tubulaire 75 dépasse à l'extérieur de la tête 61 par une partie 75a, préhensible par un outil permettant son entraînement en rotation, et comportant un épaulement 75b pour l'appui d'une vis de blocage 77. L'extrémité extérieure du corps 75 comporte également un filetage intérieur dans lequel se visse le filetage 71 de la tige de réglage 70. Le corps tubulaire 75 comporte une gorge 75c formant, avec l'alésage 69a ménagé dans la tête 61, un canal annulaire qui, isolé par des joints 78, communique avec le canal 65 et, en conséquence, avec la chambre de grande section G de l'amortisseur. Le fond de la gorge 75c est traversé par plusieurs trous radiaux 79 qui permettent au fluide hydraulique de pénétrer dans un canal annulaire 80 ménagé entre un rétrécissement de la tige 70 et l'alésage interne du corps annulaire 75.

Comme montré, à échelle agrandie, à la figure 11, le corps tubulaire 75 comporte, à son extrémité disposée dans la chambre hydraulique H, au moins une rainure radiale 81 créant, entre sa face en bout 82 formant siège pour le clapet et le clapet 72, une fuite dont le débit peut être réglé d'une valeur nulle à une valeur maximale, selon la distance S entre la face active 72a du clapet 72 et la face interne 61a de la tête 61.

Avec cet agencement, lorsque le piston 6 est en phase de compression, c'est-à-dire se rapproche de la tête 3 de l'amortisseur, une partie du fluide hydraulique contenue dans la chambre de grande section G est chassée dans la chambre de petite section P en passant à travers les ouvertures 27 du piston 6, grâce à leur dégagement par la rondelle 50 du clapet. L'autre partie du fluide est transmise, par le conduit C, à la chambre 80.

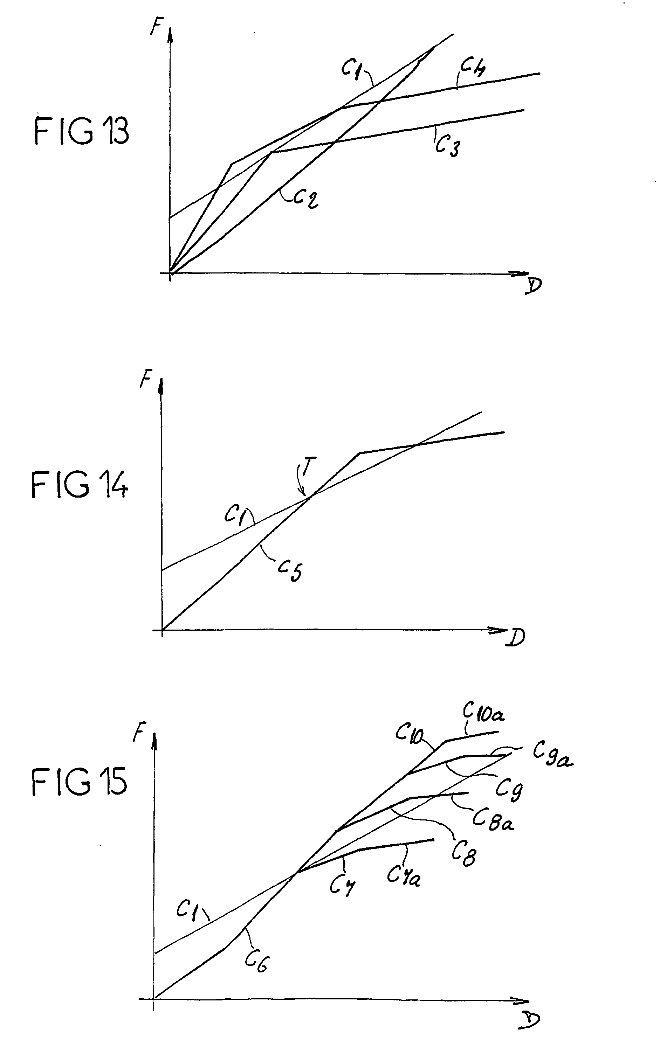

Si le piston 6 se déplace à petite vitesse, la fuite constituée par la rainure 81 est suffisante pour laisser passer le débit sans s'opposer à l'action du ressort sur une course plus ou moins longue selon le réglage. En effet et comme montré figure 13 où C1 est la courbe représentative de la variation d'effort du ressort 15, et C2, C3, C4 les courbes d'amortissement obtenues pour une utilisation, respectivement, routière, sportive et sur piste, les réglages de la valeur de pré charge, donc du débit de fuite, permettent, sans modifier la raideur du ressort, de modifier la raideur de l'ensemble de l'amortisseur au moment voulu. La courbe C2 montre que pour un usage routier une fuite importante privilégie l'action du ressort, donc le confort, tandis que pour une conduite sportive, une fuite moindre permet d'obtenir la courbe C3, où l'action prédominante du ressort est rapidement remplacée par l'amortissement hydraulique, nécessaire pour contrôler les mouvements de la caisse et permettre une conduite plus précise sur les appuis. La courbe C4 montre que pour un usage sur piste, la fuite est encore plus réduite afin que l'amortissement hydraulique agisse au plus tôt et s'ajoute à celui du ressort pour améliorer l'adhérence au sol et la transmission de la puissance.

Ces diverses conditions d'utilisation sont obtenues sur le même amortisseur en vissant ou dévissant le corps tubulaire 75 par rapport à la tête du réservoir, de manière à modifier la cote S, montrée à la figure 11, sans que cela influe d'une quelconque manière sur le tarage du clapet 72. Ce dernier est destiné à s'ouvrir lorsque l'amplitude et la vitesse de déplacement du piston sont proches des conditions à partir desquelles le ressort peut entrer en résonance. Par la courbe C5 la figure 14 montre que le réglage par le corps 75 permet, si le ressort 15 est trop souple, de lui ajouter, par l'amortisseur et à partir d'un point T quelconque de sa flèche C1, une raideur hydraulique supprimant tout risque de résonance.

Il apparaît que, par rapport aux dispositifs de réglage de la compression utilisé dans les amortisseurs actuels, dispositifs dans lesquels chaque réglage en compression pour un type de vitesse influe sur le réglage pour la ou les autres vitesses, le dispositif selon l'invention est sans influence, et en plus permet d'ajuster à volonté la précharge en fonction de la qualité du sol, du type de conduite, mais aussi de la température du fluide hydraulique puisque, en raison de la disposition à l'extérieur, sur la tête du réservoir de l'ensemble des moyens de réglage, il est très aisé de réajuster ces réglages après que l'amortisseur ait pris sa température de fonctionnement.

La forme d'exécution représentée à la figure 12 est relative à une tête de réservoir 61 qui, en plus des moyens de réglage précédemment décrits, comporte, dans un canal 69b parallèle au canal 69a, des moyens de réglage pour les hautes et très hautes vitesses. Ces moyens comprennent un corps tubulaire 85 traversé axialement et longitudinalement par une tige de réglage 86. Le corps tubulaire 85 comporte, en allant du haut vers le bas, une tête 85a saillant à l'extérieur de la tête 61 du réservoir et apte à être entraînée par des moyens permettant le réglage, une partie filetée 85b par laquelle il est vissé dans un filetage du corps 61, une partie cylindrique 85c portant les moyens d'étanchéité avec l'alésage 69b du corps 61, un rétrécissement 85d et une partie tubulaire de plus petit diamètre extérieur 85e.

La tige 86 est munie d'une tête d'actionnement 86a dépassant à l'extérieur du réservoir et de la tête du corps tubulaire 85, d'une partie filetée 86b par laquelle elle est vissée dans un alésage fileté du corps 85, d'une partie cylindrique 86c, montée coulissante dans un alésage cylindrique du corps 85 et portant les moyens d'étanchéité, d'une partie de plus petit diamètre 86d montée coulissante dans un alésage du corps tubulaire 85 et d'une extrémité filetée 86e. Sur la partie 85e du corps tubulaire 85, est monté coulissant un clapet plat 88 qui coopère avec un siège formé par la face intérieure en bout 61a du corps 61. Ce clapet 88 est plaqué sur son siège par un empilage de rondelles ressorts 89 prenant également appui sur un écrou 90 vissé sur l'extrémité filetée 85f du corps tubulaire. L'empilage de rondelle 89 et l'écrou 90 sont disposés à l'intérieur de la jupe 92a d'une cloche 92. La paroi diamétrale 92b de celle-ci est plaquée contre la face en bout du corps tubulaire 85 par un empilage de rondelles ressorts 93, disposées autour de la partie filetée 86e et dont le tarage est déterminé par un écrou 94 vissé sur cette partie filetée 86e. La figure 12 montre que, dans des conditions normales de réglage, le bord de la jupe 92a de la cloche 92 est espacé du clapet 88 par une distance E.

Dans cette tête de réservoir, la vis 70 est affectée à un réglage en compression aux basses vitesses, le corps tubulaire 75 au réglage pour les moyennes vitesse, le corps tubulaire 85 au réglage des hautes vitesses et la tige axiale 86 au réglage des très hautes vitesses. En ce qui concerne, le corps tubulaire 85, on comprend aisément que son vissage ou dévissage par rapport à la tête 61 permet de modifier la position de l'écrou 90 par rapport au clapet 88 et, en conséquence, de modifier le taux de serrage des rondelles élastiques 89. Quant à la tige 86, son vissage ou dévissage par rapport au corps 85, permet de déplacer l'écrou 94, de modifier le serrage de l'empilage de rondelles 93 plaquant la cloche 92 sur l'extrémité du corps 85, donc le tarage procuré par ces rondelles.

En fonctionnement, pour les bases et moyennes vitesses de déplacement du piston 6 dans son corps 2, le contrôle de l'amortissement est assuré par le clapet 72, comme décrit précédemment en référence à la figure 1.

Si le piston 6 se déplace à haute vitesse et génère, dans la chambre G de l'amortisseur, une onde de pression de forte valeur, le contrôle de l'amortissement est d'abord assuré par le ressort 15, comme montré en C6 figure 15 puis est assisté par l'amortissement hydraulique jusqu'à un seuil déterminé par l'ouverture du clapet haute vitesse 88 qui, en se soulevant de son siège, libère le canal 69b et permet au fluide de pénétrer dans la chambre H. Les courbes C7, C8, C9 et C10 de figure 15 correspondant à une utilisation routière, sur piste, sportive et tout terrain, montrent que ce seuil peut être réglé en fonction des besoins spécifiques d'utilisation du véhicule.

Si la pression est très élevée et correspond à un déplacement à très haute vitesse, par exemple de l'ordre de 2,5 mètres/seconde sur une course de 200 millimètres, le clapet 88 vient en contact avec la jupe 92a et peut déplacer cette jupe à l'encontre de l'empilage de rondelles 93 en augmentant la section de passage du fluide sortant du canal 69b, pour pénétrer dans la chambre H du réservoir, c'est-à-dire en réduisant l'effet de freinage procuré par le clapet. A la figure 15, ce changement des conditions d'amortissement est représenté par les courbes C7a, C8a, C9a et C10a.

Avec cet agencement, pendant la phase de compression à haute ou très haute vitesse, le débit de fluide hydraulique s'effectue avéc les sections appropriées, dans des conditions favorisant le maintien du régime laminaire, ce qui a pour avantage d'obtenir des débits réguliers, sans risque de battements des clapets et de réduire les échauffements du fluide modifiant la viscosité de ce fluide et imposant de nouveaux réglages.

A la différence des amortisseurs actuels et grâce à la facilité de réglage par les moyens 70, 75, 85 et 86 accessibles de l'extérieur, à l'organisation des clapets qui procure une constance de fonctionnement, il n'est pas nécessaire, pour régler la compression, d'intervenir sur le clapet lamellaire 50 disposé sous le piston 6, de sorte que ce clapet peut avoir un réglage constant.

Pour éviter, notamment aux très hautes vitesses de compression, la butée mécanique du piston 6 sur la tête 3 du corps d'amortisseur, la cheminée 16 solidaire du piston coopère avec l'alésage borgne 7 de la tête 3 pour former butée hydraulique de fin de course.

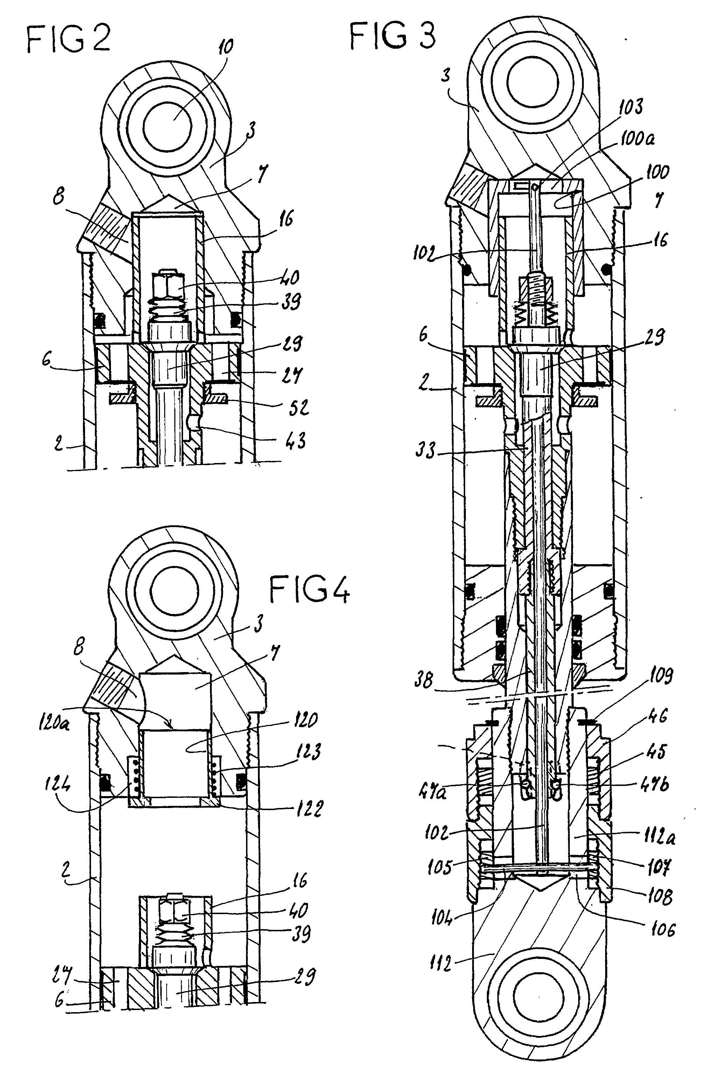

Dans la forme d'exécution représentée aux figures 1 et 2, l'alésage borgne 7 a un diamètre qui est égal, au jeu fonctionnel près, au diamètre extérieur de la cheminée 16, afin que, en fin de course, cette cheminée obture progressivement le canal 8, jusqu'à l'obturation complète montrée à la figure 2. Une telle butée a un usage tout terrain car, lors d'un saut, elle évite les chocs importants sur les butées mécaniques du véhicule.

Dans la forme d'exécution représentée à la figure 3, la cheminée 16 est coiffée par une coupelle 100 dont le diamètre extérieur est égal, au jeu fonctionnel près, au diamètre intérieur de l'alésage borgne 7. Cette coupelle est montée coulissante sur la cheminée et est positionnée par rapport à celle-ci par une tige axiale de réglage 102 traversant longitudinalement la tige 33 et la tige de commande 38 pour parvenir à des moyens de réglage disposés sur la tête inférieure 112 de l'amortisseur. L'extrémité supérieure de la tige 102 est disposée avec jeu dans un alésage axial 100a de la douille 100 et est liée à la paroi diamétrale de cette douille par une goupille diamétrale 103. Son extrémité inférieure est liée par une goupille diamétrale 104 à une douille 105, montée coulissante sur l'embout tubulaire 112a de la tête 112. La goupille traverse cet embout tubulaire par des lumières 106. La douille 105 est munie d'un filetage extérieur qui coopère avec le filetage 107 d'une molette 108, montée libre en rotation sur l'embout 112a et calée en translation par rapport à cet embout. La rotation de la molette 108 provoque le déplacement longitudinal de la douille 105 sur l'embout 112a et, en conséquence, le déplacement longitudinal de la tige 102 et de la coupelle 100.

Cet aménagement impose de modifier les moyens de liaison de la tige creuse 38 de commande du réglage du clapet 29 avec sa douille 45. A cet effet, la goupille diamétrale 47, représentée à la figure 1, est remplacée par deux goupilles transversales 47a, 47b disposées de part et d'autre de la tige axiale 102. Ces deux goupilles traversent la paroi de l'embout tubulaire 112a par deux lumières 112b. La douille 45 coopère avec une molette 46 qui est calée en translation longitudinale, d'un côté, par appui sur la molette 108, elle-même en appui sur la tête 112, et, de l'autre côté, par un jonc d'arrêt 109.

Dans la forme d'exécution représentée aux figures 4 et 5, la butée hydraulique comprend, en plus de la cheminée 16 qui est plus courte que dans les formes d'exécution précédentes, une douille 120 qui est montée coulissante dans l'alésage borgne 7 entre une position dans laquelle son bord arrière 120a dégage le canal 8 et une position dans laquelle il obture complètement ce canal. La douille 120 est munie d'une collerette avant 122 qui, d'un côté, reçoit l'appui de la face en bout de la cheminée 16 et de l'autre côté, l'appui d'un ressort de rappel 123. A la figure 4, le ressort 123 est disposé autour de la douille 120 dans un logement 124 ménagé dans la tête 3 pour la collerette 122, tandis qu'à la figure 5, il est disposé à l'intérieur de la douille et, en partie dans le logement borgne 7 contre le fond duquel il vient prendre appui.

Comme le montre en détails la figure 5, la collerette 122 se déplace dans le logement 124 dans lequel elle est emprisonnée par un jonc d'arrêt 125 contre lequel elle vient buter lorsqu'elle est en position de repos.

Quelle que soit la forme d'exécution de la butée hydraulique, lorsque le piston 6 arrive en fin de course, la face extrême de sa cheminée 16 de la douille 100 ou de la douille 120, obture progressivement le canal 8 en formant une butée hydraulique progressive qui évite au piston de venir violemment en contact contre la face interne de la tête 3 de l'amortisseur.

Les butées hydrauliques réglables sont plus particulièrement intéressantes pour l'usage sportif ou sur piste, car elles permettent d'ajuster les appuis à grande vitesse et d'éviter la prise de roulis par le véhicule.

Il ressort de ce qui précède que l'amortisseur polyvalent et à réglages multiples, selon l'invention, permet de modifier rapidement les réglages, par exemple pour passer d'un usage routier à un usage sportif ou sur piste, en évitant ainsi le recours à des barres anti roulis. En usage tout terrain la rapidité des modifications des réglages permet d'adapter le véhicule en rapport avec le terrain rencontré : boue, sec, plat, bosselé, très bosselé, nécessité de sauts.....

## Revendications

1. Amortisseur hydraulique polyvalent pour véhicule, comprenant :
- un corps d'amortisseur (2) divisé par un piston (6) en une chambre de grande section (G) et une chambre de petite section (P),
- un réservoir oléopneumatique (R) dont la chambre hydraulique (H) communique avec la chambre de grande section (G) du corps d'amortisseur,
- un ensemble mobile composé d'un piston (6) avec sa tige tubulaire (5) et présentant un canal annulaire (42) communiquant avec la chambre (P) de petite section et se terminant par un siège (22), coopérant avec un clapet anti-retour axial (29), fermé en phase de compression, ledit piston (6) étant traversé par des canaux longitudinaux (27) fermés en phase de détente par un clapet anti retour lamellaire (50),
- une tige axiale (33) disposée dans l'ensemble mobile et dont l'extrémité (34) dépassant de celui-ci dans la chambre de grande section (G), porte les moyens de tarage (31, 40) du clapet axial (29), tandis que l'autre extrémité dépasse à l'extérieur de la tige tubulaire (5) pour coopérer avec des moyens de réglage du tarage de ce clapet axial (29),
- une tête (61) de réservoir munie de moyens de réglage de la compression, au moins pour les basses vitesses, ces moyens comprenant une vis (70) de réglage dont la tige, disposée dans un canal (69a) communiquant avec la chambre de grande section (G), porte, à son extrémité débouchant dans la chambre hydraulique (H) du réservoir (R), un clapet (72) à tarage réglable coopérant avec un siège,
- et un ressort hélicoïdal (15) disposé autour du corps (2) d'amortisseur et prenant appui sur des coupelles (13, 14) liées, respectivement, au corps (2) et à l'extrémité de la tige (5) du piston,
**caractérisé en ce que** la totalité des moyens réglables (70, 71) déterminant les conditions d'amortissement en phase de compression sont disposés dans la tête (61) du réservoir (R) et sont accessibles de l'extérieur sans démontage, et ceux (71) réglant la compression à basse vitesse, comprennent un corps tubulaire (75) de réglage de la précharge se vissant dans la tête (61) du réservoir, et dépassant à l'extérieur de celle-ci par une tête de manoeuvre (75a) et, à l'intérieur du réservoir, par une extrémité active conformée en siège (82), ce corps tubulaire (75) :
a) communiquant avec la chambre (G) de grande section de l'amortisseur,
b) étant traversé axialement par la vis de réglage (70), ladite vis se vissant dans sa partie supérieure et portant, à son extrémité intérieure au réservoir (R), le clapet (72) avec ses moyens de tarage à ressort,
c) et comportant, dans sa partie conformée en siège (82) pour le clapet (72), au moins une rainure radiale (81) formant un canal de fuite déterminant la précharge, la section de passage de ce canal étant déterminée, entre une valeur zéro et une valeur maximale, par la distance (S) entre, d'une part, la face en bout (82) du corps tubulaire (75) et, d'autre part, la face interne (61 a) de la tête (61) du réservoir.

2. Amortisseur hydraulique polyvalent selon la revendication 1, **caractérisé en ce que** le clapet lamellaire (50), coopérant avec les canaux longitudinaux (27) ménagés dans le piston (6), est constitué par une unique rondelle ressort (50) dont le bord interne est pincé dans un embrèvement (6e) du piston (6) par la face en bout d'une bague épaulée (52), elle-même vissée sur un prolongement (17) du piston (6).

3. Amortisseur hydraulique polyvalent selon la revendication 2, **caractérisé en ce que** la face (6a) du piston (6) contre laquelle s'applique le clapet lamellaire (50), lorsqu'il est au repos ou en phase de compression, comporte, dans la zone d'appui du clapet (50), au moins une gorge circulaire (53) reliant les débouchés des canaux (27) traversant le piston, réduisant la surface de plaquage et de collage entre clapet (27) et face (6a) du piston, et formant un coussin de fluide amortissant.

4. Amortisseur hydraulique polyvalent selon la revendication 1, **caractérisé en ce que** des moyens de réglage de la compression à haute vitesse, disposés dans la tête (61) du réservoir avec des moyens de réglage à très haute vitesse, sont constitués par un corps tubulaire (85) traversant la tête (61) et dont l'extrémité extérieure à cette tête est vissée dans cette tête, alors que son extrémité intérieure, dépassant d'un canal (69b) ménagé dans la tête, porte un clapet (88) coopérant avec un siège formé à l'extrémité du canal (69b), les conditions d'ouverture de ce clapet (88) dépendant, à haute vitesse, du tarage de rondelles ressorts (89), disposées autour de l'extrémité intérieure du corps tubulaire (75) et entre le clapet (88) et un écrou (90) vissé sur cette extrémité, et, aux très hautes vitesses, du tarage de rondelles ressorts (93) disposées autour de l'extrémité inférieure au réservoir (R) d'une tige de réglage (86) traversant le corps tubulaire (75) et se vissant dans celui-ci, ces rondelles (93) étant interposées entre, d'une part, un écrou (94) vissé sur cette tige (86) et, d'autre part, la paroi diamétrale (92b) d'une cloche (92), en appui sur l'extrémité du corps tubulaire (75) et dont la jupe (92a), entourant les moyens de tarage à haute vitesse, s'étend en direction du clapet (88) en ménageant, entre son bord et ce clapet, un jeu (E) correspondant à sa course d'ouverture en fonctionnement à haute vitesse.

5. Amortisseur hydraulique polyvalent selon la revendication 1, **caractérisé en ce que** le piston (6) est monolithique avec une queue (17) et une cheminée tubulaire (16) saillant dans la chambre (G) de grande section et dont l'alésage interne (20) assure le guidage en translation de la tête du clapet axial (29) anti retour s'ouvrant à la détente, la paroi de cette cheminée (16) étant traversée, près du piston (6) et du siège pour le clapet axial, par plusieurs canaux radiaux (44) de passage pour le fluide, tandis que le siège pour le clapet (29) est formé par une portée tronconique (22), ménagée dans le piston (6) et apte à recevoir la tête tronconique du clapet, cette portée (22) étant prolongée dans le piston par un alésage cylindrique (19) coopérant avec la queue cylindrique (30) du clapet (29) pour former un canal annulaire (42) de stabilisation du débit de fluide transitant lors de la détente, ledit canal (42) étant alimenté par des trous radiaux (43) ménagés dans la partie tubulaire correspondante de la queue (17) du piston (6).

6. Amortisseur hydraulique polyvalent selon la revendication 5, **caractérisé en ce que** la cheminée (16) du piston coopère avec un alésage borgne (7), ménagé dans la tête (3) de l'amortisseur et communiquant avec le réservoir (R) par un canal de liaison (8), pour former une butée hydraulique d'arrêt progressif du piston (6) en fin de cours de compression.

7. Amortisseur hydraulique polyvalent selon la revendication 6, **caractérisé en ce que** l'alésage borne (7) de la tête (3) d'amortisseur a un diamètre intérieur égal, au jeu fonctionnel près, au diamètre extérieur de la cheminée (16), de manière que, en fin de phase de compression, la cheminée (16) pénétrant dans cet alésage borgne (7) obture progressivement la liaison avec le réservoir (R).

8. Amortisseur hydraulique polyvalent selon la revendication 6, **caractérisé en ce que** l'alésage borgne (7) de la tête (3) d'amortisseur contient une douille (120) qui est rappelée par un ressort (123) contre une butée (125) de manière que son bord arrière dégage le canal de liaison (8) avec le réservoir (R), cette douille (120) étant munie, sur son bord avant, d'un collet (122) disposé dans la trajectoire de déplacement de la cheminée (16) du piston, de manière que, en fin de phase de compression, la cheminée (16) déplace la douille (120) dans l'alésage borgne (7) en obturant progressivement, par son bord arrière, le canal de liaison (8) avec le réservoir (R).

9. Amortisseur hydraulique polyvalent selon la revendication 6, **caractérisé en ce que** la cheminée (16) du piston (6) est coiffée par une coupelle (100) dont le diamètre extérieur est égal, au jeu fonctionnel près, au diamètre de l'alésage borgne (7) de la tête (3) d'amortisseur, cette coupelle (100) étant réglable, par déplacement en translation longitudinale par rapport à la cheminée (16), au moyen d'une tige axiale de commande (102), montée coulissante dans la tige (33, 38) de réglage du clapet anti retour (29) et reliée, par son extrémité dépassant de l'extrémité de cette tige de réglage à vis, à des moyens de réglage (104, 405, 108) permettant de modifier la position de début d'obturation par cette coupelle (100) du canal (8) de liaison avec le réservoir (R).

10. Amortisseur hydraulique polyvalent selon la revendication 1, **caractérisé en ce que** la somme des sections de passage des canaux longitudinaux (27) traversant le piston (6) est supérieure d'au moins 50 % à la section transversale du canal (8) d'évacuation vers le réservoir (R).

## Patentansprüche

1. Hydraulische Mehrzweck-Fahrzeugdämpfungsvorrichtung, umfassend:
- einen Dämpfungsvorrichtungskörper (2), welcher durch einen Kolben (6) in eine Kammer mit großem Abschnitt (G) und eine Kammer mit kleinem Abschnitt (P) geteilt wird;
- einen ölpneumatischen Speicherbehälter (R), dessen hydraulische Kammer (H) mit der Kammer mit großem Abschnitt (G) des Dämpfungsvorrichtungskörpers in Verbindung steht;
- eine mobile Einheit, zusammengesetzt aus einem Kolben (6) mit seinem rohrförmigen Schaft (5), wobei der Kolben einen Ringkanal (42) aufweist, der mit der Kammer mit kleinem Abschnitt (P) in Verbindung steht und durch einen Sitz (22) abgeschlossen ist, welcher mit einem axialen Rückschlagventil (29) zusammenwirkt, weiches in der Kompressionsphase geschlossen ist, wobei der Kolben (6) von zwei Längskanälen (27) durchquert wird, welche in der Dekompressionsphase geschlossen sind durch ein lamellenartiges Rückschlagventil (50);
- einen axialen Schaft (33), welcher in der mobilen Einheit angeordnet ist und dessen in die Kammer mit großem Abschnitt (G) vorstehendes Ende (34) Ausgleichsmittel (31, 40) des axialen Ventils (29) trägt, wohingegen das andere Ende am rohrförmigen Schaft (5) vorsteht, um mit den Ausgleichseinstellmitteln dieses axialen Ventils (29) zusammenzuwirken;
- einen Speicherbehälterkopf (61), welcher mit Kompressionseinstellmitteln ausgerüstet ist, wenigstens für geringe Geschwindigkeiten, wobei diese Mittel eine Einstellschraube (70) umfassen, deren Schaft, der in einem mit der Kammer mit großem Abschnitt (G) in Verbindung stehenden Kanal (69a) angeordnet ist, an seinem in die hydraulische Kammer (H) des Speicherbehälters (R) einmündenden Ende ein einstellbares mit einem Sitz zusammenwirkendes Ausgleichsventil (72) trägt,
- und eine schraubenförmige Feder (15), welche um den Dämpfungsvorrichtungskörper (2) angeordnet ist und welche sich auf Federtellem (13, 14) abstützt, welche mit dem Körper (2) beziehungsweise mit einem Ende des Schafts (5) des Kolbens verbunden sind,
**dadurch gekennzeichnet, dass** die Gesamtheit der einstellbaren Mittel (70, 71), welche die Dämpfungszustände in der Kompressionsphase bestimmen, im Kopf (61) des Speicherbehälters (R) angeordnet ist, und von außen ohne Demontage zugänglich ist, und dass diese Mittel (71), die die Kompression bei geringer Geschwindigkeit regulieren, einen rohrförmigen Vorlasteinstellkörper (75) umfassen, der in den Kopf (61) des Speicherbehälters eingeschraubt ist und der nach außen über diesen vorsteht durch einen Betätigungskopf (75a) und, im Inneren des Speicherbehälters durch ein aktives Ende in Form eines Sitzes (82) vorsteht, wobei dieser rohrförmige Körper (75):
a) in Verbindung steht mit der Kammer mit großem Abschnitt (G) der Dämpfungsvorrichtung
b) axial von der Einstellschraube (70) durchquert wird, wobei diese Schraube in ihrem oberen Teil verschraubt ist und an ihrem inneren Ende im Speicherbehälter (R) das Ventil (72) mit seinen Federausgleichsmitteln trägt,
c) in seinem als Sitz (82) für das Ventil (72) geformten Teil wenigstens eine radiale Nut (81) aufweist, welche einen die Vorlast festlegenden Fluchtkanal bildet, wobei der Durchflussabschnitt dieses Kanals bestimmt wird zwischen einem Nullwert und einem Maximalwert durch den Abstand (S) zwischen einerseits der Endseite (82) des rohrförmigen Körpers (75) und andererseits der Innenseite (61a) des Kopfs (61) des Speicherbehälters.

2. Hydraulische Mehrzweckdämpfungsvorrichtung nach Anspruch 1, **dadurch gekennzeichnet, dass** das lamellenartige Ventil (50), welche mit den im Kolben (6) ausgebildeten Längskanälen (27) zusammenwirkt, durch eine einzelne Ringfeder (50) gebildet ist, deren innerer Rand an einer Spannfläche (6e) des Kolbens (6) durch die Endseite eines vorspringenden Rings (52) eingeklemmt ist, wobei dieser mit einer Verlängerung (17) des Kolbens (6) verschraubt ist.

3. Hydraulische Mehrzweckdämpfungsvorrichtung nach Anspruch 2, **dadurch gekennzeichnet, dass** die Seite (6a) des Kolbens (6), an der sich das lamellenartige Ventil (50) andrückt, wenn er sich in Ruhe oder in der Kompressionsphase befindet, im Anschlöagsbereich des Ventils (50) umfasst: wenigstens eine kreisförmige Vertiefung (53), welche die Öffnungen der den Kolben durchquerenden Kanäle (27) verbindet, wodurch die Belags- und Klebefläche zwischen Ventil (27) und der Seite (6a) des Kolbens verkleinert wird und ein Kissen von dämpfendem Fluid gebildet wird.

4. Hydraulische Mehrzweckdämpfungsvorrichtung nach Anspruch 1, **dadurch gekennzeichnet, dass** Mittel zum Einstellen der Kompression bei hoher Geschwindigkeit, welche im Kopf (61) des Speicherbehälters mit Mitteln zur Einstellen bei sehr hoher Geschwindigkeit angeordnet sind, durch einen rohrförmigen Körper (85) gebildet sind, welcher den Kopf (61) durchquert und dessen äusseres Ende ausserhalb dieses Kopfes in diesem Kopf verschraubt ist, wohingegen sein inneres Ende, welches über einen Kanal (69b) vorsteht welcher im Kopf ausgespart ist, ein Ventil (88) trägt, welches mit einem am Ende des Kanals (69b) geformten Sitz zusammenwirkt, wobei die Öffnungsbedingungen dieses Ventil (88) bei hoher Geschwindigkeit vom Ausgleich der Federscheiben (89) abhängt, welche um das innere Ende des rohrförmigen Körpers (75) und zwischen dem Ventil (88) und einer auf dieses Ende geschraubten Mutter (90) angeordnet sind, und bei sehr hohen Geschwindigkeiten vom Ausgleich der Federscheiben (93) abhängt, welche um das tiefere Ende am Speicherbehälter (R) eines Einstellschaft (86) angeordnet sind, welcher den rohrförmigen Körper (75) durchdringt und in diesen eingeschraubt ist, wobei diese Scheiben (93) zwischen einerseits einer auf diesem Schaft (86) geschraubten Mutter (94) und andererseits der diametralen Wandung (92b) einer Glocke (92) angeordnet sind, und zwar in Anschlag auf dem Ende des rohrförmigen Körpers (75), und deren Verkleidung (92a), welche die Ausgleichsmittel für hohe Geschwindigkeit umgibt, sich in Richtung des Ventils (88) erstreckt, wobei zwischen ihrem Rand und dem Ventil ein Spiel (E) gebildet ist, welches ihrem Öffnungsweg beim Betrieb bei hoher Geschwindigkeit entspricht.

5. Hydraulische Mehrzweckdämpfungsvorrichtung nach Anspruch 1, **dadurch gekennzeichnet, dass** der Kolben (6) eine Einheit bildet mit einem Endstück (17) und einem rohrförmigen Kamin (16), welcher in die Kammer mit großem Abschnitt (G) vorsteht und dessen innere Bohrung (20) die Translationsführung des Kopf des axialen sich bei Druckminderung öffnenden Rückschlagventils (29) gewährleistet, wobei die Wandung dieses Kamins (16) in der Nähe des Kolbens (6) und des Sitzes für das axiale Ventil von mehreren radialen Durchflusskanälen (44) für das Fluid durchquert wird, wohingegen der Sitz für das Ventil (29) durch eine kegelstumpfartige Öffnung (22) gebildet ist, welche im Kolben (6) ausgebildet ist und dazu eingerichtet ist, den kegelstumpfartigen Kopf des Ventils aufzunehmen, wobei diese Öffnung (22) im Kolben durch eine zylindrische Bohrung (19) im Kolben verlängert wird, welche mit dem zylindrischen Endstück (30) des Ventils (29) zusammenwirkt, um einen ringförmigen Kanal (42) zur Stabilisierung des Durchsatzes des bei Druckminderung durchströmenden Fluids zu bilden, wobei der Kanal (42) durch zwei radiale Löcher (43) gespeist wird, welche im zugehörigen rohrförmigen Teil des Endstücks (17) des Kolbens (6) ausgebildet sind.

6. Hydraulische Mehrzweckdämpfungsvorrichtung nach Anspruch 5, **dadurch gekennzeichnet, dass** der Kamin (16) des Kolbens mit einer Scheinbohrung (7) zusammenwirkt, welche im Kopf (3) der Dämpfungsvorrichtung ausgebildet ist und mit dem Speicherbehälter (R) durch einen Verbindungskanal (8) in Verbindung steht, um einen hydraulischen Anschlag für einen progressiven Stopp des Kolbens (6) am Ende des Kompressionsvorgangs zu bilden.

7. Hydraulische Mehrzweckdämpfungsvorrichtung nach Anspruch 6, **dadurch gekennzeichnet, dass** die Scheinbohrung (7) des Kopfs (3) der Dämpfungsvorrichtung einen inneren Durchmesser aufweist, welcher nahe dem zweckmäßigen Spiel, gleich wie der äußere Durchmesser des Kamins (16) ist, und zwar derart, dass am Ende der Kompressionsphase der in die Scheinbohrung (7) eindringende Kamin (16) zunehmend die Verbindung mit dem Speicherbehälter (R) verschließt.

8. Hydraulische Mehrzweckdämpfungsvorrichtung nach Anspruch 6, **dadurch gekennzeichnet, dass** die Scheinbohrung (7) des Kopfs (3) der Dämpfungsvorrichtung eine Hülse (120) enthält, welche durch eine Feder (123) gegen einen Anschlag (125) zurückgestellt wird, und zwar derart, dass ihr hinterer Rand den Verbindungskanal (8) mit dem Speicherbehälter (R) freigibt, wobei diese Hülse (120) auf ihrem vorderen Rand mit einem Flansch (122) ausgerüstet ist, welcher in der Verschiebungsbahn des Kamins (16) des Kolbens angeordnet ist, und zwar derart, dass am Ende der Kompressionsphase der Kamin (16) die Hülse (120) in die Scheinbohrung (7) verschiebt, wobei durch ihren hinteren Rand der Verbindungskanal (8) mit dem Speicherbehälter (R) zunehmend verschlossen wird.

9. Hydraulische Mehrzweckdämpfungsvorrichtung nach Anspruch 6, **dadurch gekennzeichnet, dass** der Kamin (16) des Kolbens (6) von einer Schale (100) bedeckt ist, deren äußerer Durchmesser nahe dem zweckmäßigen Spiel gleich ist wie der Durchmesser der Scheinbohrung (7) des Kopfs (3) der Dämpfungsvorrichtung, wobei diese Schale (100) durch Längsverschiebung bezüglich des Kamins (16) verstellbar ist mittels eines axialen Einstellschafts (102), welcher verschiebbar im Einstellschaft (33, 38) des Rückschlagventils (29) angebracht ist und durch sein über das Ende dieses Schraub-Einstellschafts vorstehendes Ende mit Einstellmitteln (104, 405, 108) verbunden ist, welche es erlauben, die Anfangsposition des Verschlusses des Verbindungskanals (8) mit dem Speicherbehälter (R) durch diese Schale (100) zu verändern.

10. Hydraulische Mehrzweckdämpfungsvorrichtung nach Anspruch 1, **dadurch gekennzeichnet, dass** die Summe der Durchflussquerschnitte der Längskanäle (27), welche den Kolben (6) durchqueren, um wenigstens 50% grösser ist als der Querschnitt des Kanals (8) der Entleerung zum Speicherbehälter (R) hin.

## Claims

1. Polyvalent hydraulic shock absorber for a vehicle, comprising:
- a shock-absorber body (2) which is divided by a piston (6) into a chamber with a large cross-section (G) and a chamber with a small cross-section (P);
- an oleopneumatic reservoir (R), the hydraulic chamber (H) of which communicates with the chamber with a large cross-section (G) of the shock-absorber body;
- a mobile assembly which consists of a piston (6) with its tubular rod (5) and has an annular channel (42) which communicates with the chamber (P) with a small cross-section and ends in a seat (22) which co-operates with an axial non-return flap valve (29) which is closed in the compression stage, the said piston (6) having longitudinal channels (27) passing through it which are closed in the release stage by a lamellar non-return flap valve (50);
- an axial rod (33) which is disposed in the mobile assembly, and the end (34) of which, which projects from the latter into the chamber with a large cross-section (G), supports means for calibration (31, 40) of the axial flap valve (29), whereas the other end projects to the exterior of the tubular rod (5) in order to co-operate with means for regulation of the calibration of this axial flap valve (29);
- a reservoir head (61) provided with means for regulation of the compression, at least for low speeds, these means comprising an adjustment screw (70), the rod of which, which is disposed in a channel (69a) which communicates with the chamber with a large cross-section (G), supports at its end which opens into the hydraulic chamber (H) of the reservoir (R) a flap valve (72) with adjustable calibration which co-operates with a seat; and
- a helical spring (15) which is disposed around the body (2) of the shock absorber and is supported on dishes (13, 14) which are connected respectively to the body (2) and to the end of the rod (5) of the piston,
**characterised in that** all of the adjustable means (70, 71) which determine the conditions of shock absorption in the compression stage are disposed in the head (61) of the reservoir (R), and are accessible from the exterior without dismantling, and those (71) which regulate the compression at low speed comprise a tubular body (75) for regulation of the pre-loading, which is screwed into the head (61) of the reservoir and projects on the exterior of the latter by means of a manoeuvring head (75a), and projects in the interior of the reservoir by means of an active end which is in the form of a seat (82), this tubular body (75):
a) communicating with the chamber (G) with a large cross-section of the shock absorber;
b) having the adjustment screw (70) passing through it axially, the said screw being screwed into its upper part, and supporting on its end inside the reservoir (R) the flap valve (72) with its spring calibration means; and
c) comprising in its part which is in the form of a seat (82) for the flap valve (72) at least one radial groove (81) which forms an escape channel which determines the preloading, the cross-section of passage of this channel being determined, between a zero value and a maximal value, by the distance (S) between firstly the end surface (82) of the tubular body (75) and secondly the inner surface (61a) of the head (61) of the reservoir.

2. Polyvalent hydraulic shock absorber according to claim 1, **characterised in that** the lamellar flap valve (50), which co-operates with the longitudinal channels (27) provided in the piston (6), consists of a single spring washer (50), the inner edge of which is gripped in an inside recess (6e) in the piston (6) by the end surface of a shouldered ring (52), which itself is screwed onto an extension (17) of the piston (6).

3. Polyvalent hydraulic shock absorber according to claim 2, **characterised in that** the surface (6a) of the piston (6) against which the lamellar flap valve (50) is applied when it is at rest or in the compression stage, comprises in the area of support of the flap valve (50) at least one circular groove (53) which connects the openings of the channels (27) which pass through the piston, thus reducing the surface area of lying flat and adhesion between the flap valve (27) and the surface (6a) of the piston, and forming a shock-absorbing fluid cushion.

4. Polyvalent hydraulic shock absorber according to claim 1, **characterised in that** the means for regulation of the compression at high speed, which are disposed in the head (61) of the reservoir with means for regulation at very high speed, consist of a tubular body (85) which passes through the head (61), and the end of which that is on the exterior of this head is screwed into this head, whereas its inner end, which extends from a channel (69b) provided in the head, supports a flap valve (88) which co-operates with a seat formed at the end of the channel (69b), the conditions of opening of this flap valve (88) depending, at high speed, on the calibration of the spring washers (89) which are disposed around the inner end of the tubular body (75), and between the flap valve (88) and a nut (90) which is screwed onto this end, and, at very high speeds, on the calibration of the spring washers (93) which are disposed around the end below the reservoir (R), of a regulation rod (86) which passes through the tubular body (75) and is screwed into the latter, these washers (93) being interposed between firstly a nut (94) which is screwed onto this rod (86), and secondly the diametral wall (92b) of a bell (92) which is supported on the end of the tubular body (75), and the skirt (92a) of which, which surrounds the means for calibration at high speed, extends in the direction of the flap valve (88), whilst providing between its edge and this flap valve play (E) which corresponds to its course of opening in operation at high speed.

5. Polyvalent hydraulic shock absorber according to claim 1, **characterised in that** the piston (6) is monolithic with a tail (17) and a tubular shaft (16) which projects into the chamber (G) with a large cross-section, and the inner bore (20) of which assures the guiding in translation of the head of the non-return axial flap valve (29) which opens during release, the wall of this shaft (16) having a plurality of radial passage channels (44) for the fluid passing through it, near to the piston (6) and the seat for the axial flap valve, whereas the seat for the flap valve (29) is formed by a frusto-conical bearing surface (22) which is provided in the piston (6) and can receive the frusto-conical head of the flap valve, this bearing surface (22) being extended in the piston by a cylindrical bore (19) which co-operates with the cylindrical tail (30) of the flap valve (29) in order to form an annular channel (42) for stabilisation of the flow rate of fluid conveyed during the release, the said channel (42) being supplied by radial holes (43) provided in the corresponding tubular part of the tail (17) of the piston (6).

6. Polyvalent hydraulic shock absorber according to claim 5, **characterised in that** the shaft (16) of the piston co-operates with a blind bore (7) which is provided in the head (3) of the shock absorber and communicates with the reservoir (R) by means of a connection channel (8), in order to form a progressive hydraulic stop for the piston (6) at the end of the compression course.

7. Polyvalent hydraulic shock absorber according to claim 6, **characterised in that** the blind bore (7) in the head (3) of the shock absorber has an inner diameter which is equal, to within the functional play, to the outer diameter of the shaft (16), such that, at the end of the compression stage, the shaft (16) which penetrates in this blind bore (7) progressively shuts the connection with the reservoir (R).

8. Polyvalent hydraulic shock absorber according to claim 6, **characterised in that** the blind bore (7) in the head (3) of the shock absorber contains a bush (120) which is returned by a spring (123) against a stop (125), such that its rear edge releases the channel (8) for connection with the reservoir (R), this bush (120) being provided on its front edge with a collar (122) which is disposed in the displacement trajectory of the shaft (16) of the piston, such that, at the end of the compression stage, the shaft (16) displaces the bush (120) in the blind bore (7), whilst shutting progressively by means of its rear edge the channel for connection (8) with the reservoir (R).

9. Polyvalent hydraulic shock absorber according to claim 6, **characterised in that** the shaft (16) of the piston (6) is capped by a dish (100), the outer diameter of which is equal, to within the functional play, to the diameter of the blind bore (7) in the head (3) of the shock absorber, this dish (100) being adjustable, by displacement in longitudinal translation relative to the shaft (16), by means of an axial control rod (102) which is fitted such as to slide in the regulation rod (33, 38) of the non-return flap valve (29), and is connected, by its end which projects from the end of this screw regulation rod, to means for regulation (104, 405, 108) which make it possible to modify the position of commencement of shutting by this dish (100) of the channel (8) for connection with the reservoir (R).

10. Polyvalent hydraulic shock absorber according to claim 1, **characterised in that** the sum of the cross-sections of passage of the longitudinal channels (27) which pass through the piston (6) is at least 50% greater than the transverse cross-section of the channel (8) for discharge towards the reservoir (R).
